# EUROPEAN PATENT SPECIFICATION

(11) **EP 3 903 570 B1**
(45) Date of publication and mention of the grant of the patent: **14.05.2025**
(21) Application number: 20209887.7
(22) Date of filing: 25.11.2020
(51) Int. Cl.: A01G 9/24, F26B 3/04, F26B 3/28, F26B 9/06, F26B 21/08, F26B 21/10, F26B 25/08

(54) **METHOD OF A CORK STABILIZATION GREENHOUSE**
VERFAHREN KORKSTABILISIERUNGS-GEWÄCHSHAUS
MÉTHODE D'UNE SERRE DE STABILISATION DU LIÈGE

(30) Priority: 29.04.2020 PT 2020116310
(43) Date of publication of application: 03.11.2021
(73) Proprietor: Instituto Politécnico de Coimbra, P-3000-271 Coimbra (PT)
(72) Inventor: MOURA NEVES DE CASTRO, Luis Miguel, P-3885-580 Esmoriz (PT); BORGES FONTES NEGRÃO BEIRÃO, Pedro Jorge, P-2685-164 Sacavém (PT); PEREIRA DO AMARAL, António Luís, P-3140-348 Pereira (PT); FERREIRA ROSEIRO, Luis Manuel, P-3030-254 Coimbra (PT); DA SILVA AGUIAR, Filipe Emanuel, P3045-039 Coimbra (PT); GOMES ALMEIDA SILVA BARATA, António José, P-4620-839 Meinedo (PT); CORREIA MARTINS, José Alexandre, P-3130-227 Soure (PT); COELHO MARQUES PINHEIRO, Maria Nazaré, P-3040-786 Cernache (PT)
(74) Representative: Lourenço Martinho do Rosário, Ana Margarida

(56) References cited:
- CA-A1- 2 232 388
- JP-B2- 5 621 597
- US-B2- 7 748 137
- ANONYMOUS: "Code International des Pratiques Bouchonnières", CELIEGE, 4 August 2020 (2020-08-04), XP093074921, Retrieved from the Internet <URL:https://www.contactalimentaire.fr/sites/default/files/media/file/field_media_file/code-international-des-pratiques-bouchonnieres.pdf> [retrieved on 20230818]

## Description

### Framework and background of the invention

The present invention falls within the cork industry, more specifically in the cork preparation subsector and concerns a stabilization greenhouse for cork.

One of the initial stages in the cork stopper production process is the stabilization of cork as a raw material. This operation corresponds to the period during which the cork planks remain in open air, before being submitted to the first cooking, with the aim of stabilizing the raw material and releasing part of the growth stresses, flattening the typical curved shape and thus reducing the curvature of the planks.

In the stripping process, during which the cork is removed from the cork oaks, the cork planks, after being removed, have an average moisture content (dry basis) between 20% and 50% (Pereira, 2007; Sousa, 1997). These are then placed in piles usually exposed to the weather for at least six months in the cork oak forest or in the parks of the preparatory industries. This way, the raw cork planks dry in natural conditions, losing moisture, releasing internal stresses and stabilizing chemically by oxidation of polyphenols. This traditional stabilization process is, however, conditioned by the climate and can be affected by the contamination of the cork with soil, dust, insects, and, above all, the development of microorganisms that can cause considerable qualitative losses of cork.

One of the main problems associated with this phase of cork stopper production is the development of microorganisms that increase the appearance of organoleptic deviations in the final product, namely due to the presence of 2,4,6-Trichloroanisole (TCA), as is the case in cork stoppers.

Moderate temperatures between 20°C and 30°C and high humidity favour microbiological activity in general, and also the fungi responsible for bio methylation of TCA's precursors.

The good practices in the cork industry defined in the International Code of the Stopper Practices (CELIEGE, 2014) require that cork stoppers be stored at temperatures below 20°C and with relative humidity of 50% to 70%, in order to provide a moisture content of 4% to 9% in the cork stoppers, thus guaranteeing good mechanical properties and inhibiting the development of microorganisms.

The development of these microorganisms, which by bio methylation produce TCA when in contact with their precursors, is boosted in the areas of rainwater accumulation, as well as when there are favourable atmospheric conditions for their propagation, namely in situations of high humidity and temperature, which frequently occur during the traditional cork stabilization process.

Another factor that enhances TCA production is the lack of aeration of the cork planks when stored for stabilization. Sometimes these are protected from rainfall by zinc sheets or plastic tarps, retaining moisture inside the cork pile and making evaporation harder, thus increasing the likelihood of TCA production.

The present invention solves the problem arising from using the traditional cork stabilization method and the potential development of TCA, as it enables stabilization under conditions of controlled temperature and humidity, with ventilation and with a reduced risk of contamination of the cork planks.

The disclosure describes a stabilization greenhouse for cork, with conditions to control humidity and temperature of the interior atmosphere, and forced ventilation whenever the conditions inside recommend it. Additionally, the greenhouse is fully powered by renewable energies, the stabilization greenhouse being environmentally sustainable. The stabilization greenhouse for cork fosters the drying of cork through the greenhouse effect, which results from the solar radiation which passes through its walls.

The increase in temperature inside the greenhouse reduces the relative humidity of the ambient air inside the greenhouse, increasing its capacity to receive evaporated water from the cork planks. This increase in the driving force for the diffusion/convection of water vapour from the surface of the cork planks to the air inside the greenhouse promotes the evaporation rate of the water from the cork, the humid air inside the greenhouse being removed by forced ventilation, whenever the humidity levels so warrant.

This way, the stabilization of the cork will occur in a controlled environment with low relative humidity, high temperature, and protected from rainfall, contrary to what happens in the traditional process, inhibiting or drastically reducing the possibility of bio methylation reactions of TCA's precursors, which substantially improves the quality of the final product.

A few disclosures in the state of the art focus on the drying of cork as a raw material; however none of these disclosures remedies the development of microorganisms, which compromise the quality of the cork planks for the production of stoppers.

Chinese Patent No. CN109163508 discloses a device for drying and deodorizing cork granulate using fossil fuels. There are yet a few scientific disclosures, such as in Madaleno et al. (2017), which studied the kinetics of drying cork granulate in a laboratory tray dryer, under different conditions of drying air speed and temperature, Costa and Pereira (2013), which studied the process of drying raw cork planks in ambient air in a cork pile, and Belghit and Bennis (2009), which studied the kinetics of drying small cork planks in a laboratory dryer.

US 7 748 137 B2 discloses a drying process for wood based materials and a greenhouse.

Thus, the present invention contributes with the following advantages in relation to the state of the art:
- enhancing the drying and stabilization process of the cork planks;
- reducing the appearance of fungi that can contaminate the cork, namely with TCA;
- reducing cork contamination due to contact with soil and insects;
- increasing the productivity of the stabilization process by reducing the time necessary for the full drying of the cork and ensuring greater homogeneity of the moisture content of the cork planks;
- reducing the incidence of the TCA problem on the cork stoppers, which is the main threat to the cork sector, an important branch of the economic activity in Portugal;
- providing a self-sustaining, autonomous and portable stabilization system that can be used both in the cork oak forest and in the cork parks of the first processing industries.

### Summary of the invention

The present invention is achieved according to the appended claims. The disclosure therefore concerns a stabilization greenhouse for cork and the corresponding cork stabilization method through said system, in a controlled atmosphere, inhibiting microbiological development. This stabilization greenhouse enables the cork planks to remain protected from external contamination and sheltered from the outside environment, which can affect an ideal stabilization, such as thermal amplitudes, rainfall, thus inhibiting the formation of TCA, a factor that determines the quality of the subsequently produced cork stoppers.

The cork stabilization greenhouse comprises the following main functional elements:
- at least one fan for extraction of saturated humid air and at least one means of air intake from the outside to the inside of the stabilization greenhouse);
- a command and control unit for the operation of the fan and the means of air intake, consisting of temperature measuring sensors and humidity measuring sensors;
- at least one solar panel for photovoltaic energy production, storage and supply to the system, connected to controllers limiting excess photovoltaic energy.

Also an object of the present invention is a method of cork stabilization according to claim 1.

### Brief description of the figures

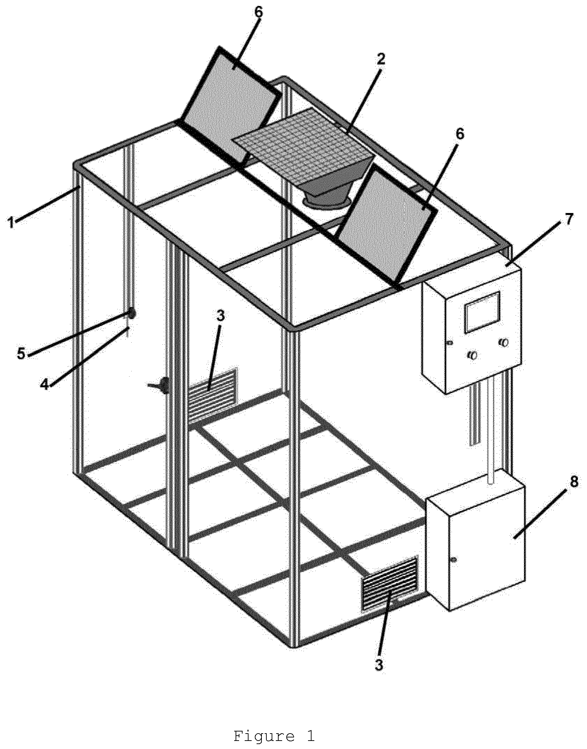

Figure 1 - Schematic representation of the greenhouse (1) that comprises an axial-type fan (2) with photovoltaic support, placed in the upper section of the greenhouse (1), two means of air intake (3), thermocouples (4) and humidity sensors (5), two solar panels (6) for production and storage of energy for the system, two cabinets (7) (8) intended to house the elements of the systems of measurement and control and of production and storage of photovoltaic energy.

### Detailed description of the invention

It is important to explain the operation of each element that makes up the cork plank greenhouse (1) as well as the stabilization method using the described greenhouse (1).

In a preferred embodiment of the invention, the walls of the greenhouse (1) are made of acrylic or any other translucent and heat retaining material that provides solar radiation retention and promotes the greenhouse effect.

The acrylic, which covers the walls of the greenhouse (1), is a low-density composite material and has a greater capacity to retain solar radiation than glass, which is why acrylic is the preferred material, in addition to being lighter.

In another preferred embodiment of the invention, the coating material of the greenhouse (1) is between 5 mm and 35 mm thick, depending on the area of the greenhouse (1).

For extraction of humid air, a fan (2) is integrated in the greenhouse (1), powered by energy from at least one solar panel (6) and ensuring the extraction of the saturated air. This extraction through the fan (2) enhances the drying process by gradually reducing the moisture content present in the cork planks, as well as the renewal of the air contributing to better air quality inside the stabilization greenhouse (1).

In a preferred embodiment of the invention, the fan (2) is of the axial type, since it is an easy-to-install device with good extraction performance.

The system also has at least one mean of air intake (3) from the outside to the inside of the greenhouse, which are grilles for air intake into the inside of the greenhouse (1), opening when the fan (2) is in operation, allowing outside air, fresh and humid, to enter the greenhouse (1).

The means of air intake (3) is located below the fan (2) and preferably at the base of the greenhouse (1) to ensure efficient air recirculation inside the greenhouse (1).

The means of air intake (3) are points of entry such as grilles that enable air to enter whenever it is necessary to introduce fresh and humid air into the greenhouse.

In order to make the process more efficient, the means of air intake (3) closes automatically when air recirculation has been completed. When opened, the means of air intake (3), combined with extraction through the fan (2), enables renewal of the air inside the greenhouse.

The stabilization system for cork also comprises at least one solar panels (6) as a power supply for the greenhouse (1), namely for the command and control unit.

The components that make up the system for measuring and controlling, respectively, the temperature and relative humidity at various points within the greenhouse, include multiple temperature sensors, preferably thermocouples (4) and multiple humidity sensors (5), arranged in the greenhouse (1), and connected to the command and control unit which enables the control and monitoring of various parameters of the drying process.

In addition, the cork stabilization system houses elements installed in the photovoltaic energy production system's cabinets, namely the batteries and controllers that limit the possible excess of photovoltaic energy produced. Thus, the solar panel (6) charges the batteries for the electric current supply that feeds the cork stabilization system for the cork industry.

It is now important to explain the cork stabilization method.

After the stripping process, the cork planks may have a high moisture content, so at the beginning of the stabilization process, they have a moisture content between 20% and 50% (dry basis).

The greenhouse (1), through the greenhouse effect typical of this kind of structure, reaches a high temperature, which is controlled between 50°C and 70°C, preferably between 60°C and 70°C, using the command and control unit. The temperature of 60°C is the volatilization temperature of the cork's TCA, so the control temperature values are ideal to guarantee the elimination of the contaminant in the cork.

The flow of humid air extraction through the fan (2) and the introduction of humid air through the means of air intake (3) depends on the moisture content of the cork, which varies over time and with weather conditions, the renewal of the interior air being determined by the control of temperature and humidity inside the greenhouse.

Through the described process, the stabilization of the cork planks takes place over a time interval of 2 to 5 months, depending on the initial moisture content, the characteristics of the plank and its thickness.

Since stabilization conditions are ideal, i.e., with temperature and humidity being controlled according to the gradual drying of the planks, the drying will be faster, so the stabilization time may be less than the currently required 6 months.

Finally, the stabilization process ends when the moisture content in the cork does not change significantly, indicating that the conditions of balance with the existing drying air conditions have been achieved.

### References

Belghit, A.; Bennis, A. (2009) Experimental analysis of the drying kinetics of cork. Energy Convers. Manage., 50, 618-625
CELIEGE (2014) International Code of the Stopper Practices. Confédération Européenne du Liège. Version 6.06.
Costa, A.; Pereira H. (2013) Drying kinetics of cork planks in a cork pile in the field. Food and Bioproducts Processing. 91, 14-22
Gangyina, Luo; Liuji, Li; Gaowei, Zhao; Liuyong, Cui;
Huichuan, Zhou; Zhanjun, Liu (2019) *Cork wood drying and deodorization process and equipment.* Zhengzhou Dingli New Energy Technology CO LTD. Patent CN109163508(A), 2019-0108. Madaleno, R. O.; Castro, L. M.; Pinheiro, M. N. Rabbit (2017) Drying kinetics of granulated cork: Effect of air drying stream conditions and granule size. Biomass and Bioenergy, 107, 8-19
Pereira, H. (2007) Cork: Biology, Production and Uses, 1st ed. Elsevier Publications, Amsterdam.
Sousa, A.C. (1997) Sobreiro - Caracterização do crescimento e avaliação da produção de cortiça. Master's Thesis. Instituto Superior de Agronomia, Universidade Técnica de Lisboa.

## Claims

1. Method of cork stabilization using a greenhouse comprising a command-and-control unit for fan (2) operation and the means of air intake (3), comprising multiple temperature measuring sensors (4) and multiple humidity measuring sensors (5) arranged in the greenhouse (1) and at least a solar panel (6) for photovoltaic energy production, storage and supply to the system, connected to controllers limiting excess photovoltaic energy wherein it comprises the following steps:
a) placing the cork planks with an initial dry basis moisture content between 25% and 50% inside a greenhouse (1);
b) raising the temperature inside the greenhouse (1) via greenhouse effect to between 50°C and 70°C;
c) recirculating air by extraction of humid air using a fan (2) and introduction of air from the outside through a means of air intake (3);
d) stabilizing the cork inside the greenhouse (1) for a period of 2 to 5 months until the cork reaches a dry basis moisture content of between 4% and 9%.

2. Method according to the previous claim, wherein the means of air intake (3) closes automatically when air recirculation has been completed.

## Patentansprüche

1. Verfahren zur Stabilisierung von Kork unter Verwendung eines Treibhauses (1), umfassend eine Steuer- und Regelungseinheit für den Betrieb eines Ventilators (2) sowie Mittel zur Luftzufuhr (3), ausgestattet mit mehreren Temperatursensoren (4) sowie mehreren Feuchtigkeitssensoren (5), wobei mindestens ein Solarpanel (6) zur Erzeugung, Speicherung und Bereitstellung von Photovoltaikenergie für das System vorgesehen und mit Reglern zur Begrenzung überschüssiger Photovoltaikenergie verbunden ist, das die folgenden Schritte umfasst:
a) Einbringen der Korkplatten mit einem anfänglichen Trockensubstanz-Feuchtegehalt zwischen 25% und 50% in das Treibhaus (1);
b) Erhöhen der Temperatur innerhalb des Treibhauses (1) durch den Treibhauseffekt auf einen Bereich zwischen 50 °C und 70 °C;
c) Luftzirkulation durch Absaugung der feuchten Luft mittels eines Ventilators (2) und Zuführung von Außenluft über ein Luftzufuhrmittel (3);
d) Stabilisieren des Korks im Treibhaus (1) über einen Zeitraum von 2 bis 5 Monaten, bis der Kork einen Trockensubstanz-Feuchtegehalt zwischen 4% und 9% erreicht.

2. Verfahren nach dem vorhergehenden Anspruch, wobei das Luftzufuhrmittel (3) sich nach Abschluss der Luftzirkulation automatisch schließt.

## Revendications

1. Méthode de stabilisation du liège utilisant une serre comprenant une unité de contrôle-commande pour le fonctionnement du ventilateur (2) et le dispositif d'admission d'air (3), comprenant de nombreux capteurs de mesure de la température (4) et capteurs de mesure de l'humidité (5) placés dans la serre (1) et au moins un panneau solaire (6) pour la production, le stockage et l'approvisionnement de l'énergie photovoltaïque dans le système, raccordé aux régulateurs limitant toute énergie photovoltaïque excédentaire, dans laquelle elle comprend les étapes suivantes:
a) placer les planches en liège ayant une teneur en humidité sur base sèche initiale comprise entre 25% et 50% à l'intérieur d'une serre (1);
b) augmenter la température à l'intérieur de la serre (1), par effet de serre, de 50 °C à 70 °C;
c) recirculer l'air par extraction de l'air humide en utilisant un ventilateur (2) et introduction de l'air extérieur par un dispositif d'admission d'air (3);
d) stabiliser le liège à l'intérieur de la serre (1) pendant une période de 2 à 5 mois jusqu'à ce que le liège atteigne une teneur en humidité sur base sèche comprise entre 4% et 9%.

2. Méthode selon la revendication précédente, dans laquelle le dispositif d'admission d'air (3) se ferme automatiquement dès que la recirculation de l'air est terminée.
